# EUROPÄISCHE PATENTSCHRIFT

(11) **EP 2 649 331 B1**
(45) Veröffentlichungstag und Bekanntmachung des Hinweises auf die Patenterteilung: **17.07.2019**
(21) Anmeldenummer: 11802879.4
(22) Anmeldetag: 07.12.2011
(51) Int. Cl.: F16C 19/20, F16C 43/06, F16C 33/37

(54) **RADIALWÄLZLAGER MIT LOSEN ABSTANDSKÖRPERN ZWISCHEN DEN WÄLZKÖRPERN UND VERFAHREN ZUM ZUSAMMENBAU DES WÄLZLAGERS**
RADIAL ROLLING BEARING WITH LOOSE SPACING BODIES BETWEEN THE ROLLING ELEMENTS AND METHOD OF ASSEMBLING THE ROLLING BEARING
ROULEMENT RADIAL AVEC ORGANES D'ESPACEMENT LIBRES ENTRE LES ÉLÉMENTS ROULANTS ET PROCÉDÉ D'ASSEMBLAGE DU ROULEMENT

(30) Priorität: 09.12.2010 DE 102010062712
(43) Veröffentlichungstag der Anmeldung: 16.10.2013
(73) Patentinhaber: Aktiebolaget SKF (publ), 415 50 Göteborg (SE)
(72) Erfinder: HOFMANN, Sabine, 97072 Würzburg (DE); LIANG, Baozhu, 97456 Hambach (DE); REUGELS, Michael, 97478 Knetzgau (DE)
(74) Vertreter: Schonecke, Mitja
(86) Internationale Anmeldenummer: PCT/EP2011/072053
(87) Internationale Veröffentlichungsnummer: WO 2012/076594

(56) Entgegenhaltungen:
- DD-A- 28 505
- DE-C- 165 758
- DE-C- 185 998
- DE-C- 194 484
- DE-C- 199 184
- FR-E- 86 757
- SU-A1- 846 836
- US-A- 4 022 516
- US-A1- 2009 158 592

## Beschreibung

Die vorliegende Erfindung befasst sich mit Wälzlagern und insbesondere mit einem neuen Käfigkonzept bzw. mit einem Konzept, das es ermöglicht, die Mehrzahl von Wälzkörpern in einem Wälzlager relativ zueinander in einem definierten Minimalabstand zu halten.

Zur Vermeidung des gegenseitigen Berührens bzw. des Anlaufens der Rollen bzw. der Wälzkörper in einem Wälzlager werden Wälzlagerkäfige verwendet. Zur Erhöhung der Tragzahl eines Wälzlagers kann die Größe der Wälzkörper selbst erhöht werden, sodass ein insgesamt größeres Lager entsteht. Alternativ kann versucht werden, eine höhere Anzahl von Wälzkörpern in dem Lager konstanter Größe einzusetzen. Letzteres kollidiert oft mit den Anforderungen, die die Produktion bzw. der Zusammenbau eines Lagers an die Lagerkäfige stellen. Schnappkäfige sind beim Zusammenbau eines Lagers gut zu handhaben, da sie die Wälzkörper, beispielsweise die Kugeln eines Kugellagers, durch ihre Eigenelastizität halten, wodurch sie auch ein Auseinanderfallen des Lagers nach der Montage verhindern. Allerdings verbrauchen Schnappkäfige vergleichsweise viel Platz, da die Stege der Schnappkäfige zwischen den Wälzkörpern vergleichsweise dick sein müssen, um die erforderliche Haltekraft für die Wälzkörper aufbringen zu können. Bei Verwendung eines Schnappkäfigs ist es daher schwierig, die Anzahl der Wälzkörper auf das theoretische Maximum zu erhöhen, das durch die Anzahl der möglichen Wälzkörper in einem Lager gegeben ist, in dem auf einen Käfig verzichtet wird.

Herkömmliche Käfige wiederum, die radial vollständig umlaufen, können so konstruiert werden, dass die Stege zwischen den einzelnen Wälzkörpern vergleichsweise dünn sind. Allerdings ist die Verwendung solcher Käfige beim Zusammenbau des Lagers von Nachteil. Bei Kugellagern werden beispielsweise nach dem eigentlichen Bestücken des Lagers mit Kugeln von beiden Seiten Käfighälften auf das Lager aufgelegt und miteinander verpresst, vernietet oder anders in der axialen Richtung miteinander verbunden. Bei einigen Wälzlagertypen wird ein solcher herkömmlicher Lagerkäfig nach der Montage zusätzlich eingezogen, das heißt, sein Durchmesser wird nach dem anbringen des Käfigs durch einen weiteren Bearbeitungsschritt verringert, um ein Auseinanderfallen des Lagers zu verhindern. Dies rührt daher, dass der Käfigring bei der Montage typischerweise zunächst in der axialen Richtung über einen Bord bewegt werden muss, weswegen der Käfigdurchmesser größer sein muss als der Durchmesser des Bords. Im Betrieb ist jedoch gewünscht, dass der Käfigdurchmesser geringer ist als der Durchmesser des Bords, um das Auseinanderfallen des Lagers bzw. der Wälzkörper zu verhindern. Diese soeben beschriebenen Verfahren verursachen bei den herkömmlichen Käfigen, bei denen eine hohe Anzahl von Wälzkörpern pro Lager möglich wäre, einen erheblichen Montagemehraufwand.

Es besteht somit ein Bedarf nach einem Konzept, das es effizienter ermöglicht, die Berührung zueinander benachbarten Wälzkörper eines Wälzlagers zu verhindern und eine möglichst große Zahl von Wälzkörpern im Lager zu verwenden.

Bei einigen Ausführungsbeispielen der vorliegenden Erfindung wird zwischen zwei zueinander direkt benachbarten Wälzkörpern in einem Wälzlager ein separates Abstandselement verwendet, das geometrisch so dimensioniert ist, dass es einen vorbestimmten Minimalabstand zwischen den beiden Wälzkörpern gewährleistet.

Das Abstandselement ist zweiteilig ausgeführt, d.h., es besteht aus einem ersten, radial innenliegenden Teilelement und aus einem zweiten, radial außenliegenden Teilelement. Radial innen liegend heißt in diesem Zusammenhang, dass sich das Teilelement in der radialen Richtung vollständig innerhalb (d.h. näher zur Lagerachse) des radial außenliegenden Teilelements befindet. D.h. mit anderen Worten, das radial außenliegende Teilelement überbedeckt das innenliegende Teilelement in der radialen Richtung nach außen vollständig. Wie üblich bezeichnet eine axiale Richtung eine Richtung parallel zur Rotationsachse des Lagers und eine radiale Richtung jede mögliche Richtung senkrecht dazu.

Die beiden Teilelemente sind miteinander entlang einer Trennfläche verbunden und bilden gemeinsam das Abstandselement. Diese Verbindung kann form-, kraft- oder stoffschlüssig sein und die Trennfläche kann jedwede geometrische Form aufweisen. So kann bei einigen Ausführungsbeispielen die Trennfläche die Form einer T-Nut haben oder mäanderförmig verlaufen, um beispielsweise beim Verkleben die Kontaktfläche und somit die Stabilität der Verbindung zu erhöhen. Bei anderen Ausführungsbeispielen ist die Trennfläche beispielsweise derart ausgestaltet, das das erste Teilelement und das zweite Teilelement über einen Schnapp-Mechanismus miteinander verbunden werden.

Die Verwendung eines Abstandselements, das aus zwei Teilelementen besteht, ermöglicht es, die Anzahl der Wälzkörper beispielsweise dann weiter zu erhöhen, wenn das aus mindestens zwei Teilelementen bestehenden Abstandselement als letztes montiert wird. In diesem Fall kann der verfügbare Platz auf dem Lagerteilkreis bzw. der Platz, der zwischen den letzten Wälzkörpern noch frei ist, minimal sein, da ein verkipptes Einbringen bzw. Montieren des letzten Abstandselements aufgrund dessen Zweiteiligkeit nicht erforderlich ist. Vielmehr kann bei Verwendung eines zweiteiligen Abstandselements zunächst das innenliegende Teilelement oder das außenliegende Teilelement eingebracht und so positioniert werden, dass es sich in eine Ausnehmung im Innen-oder Außenring hinein erstreckt, bevor das zweite Teilelement in der axialen Richtung ebenfalls zwischen die beiden Lagerringe eingebracht wird. In der endgültig ausgerichteten Position können dann die beiden Teilelemente zum Abstandselement verbunden werden. Dadurch wird der Platzbedarf, der für die Montage des letzten Abstandselements erforderlich ist, minimiert und darüber durch die Maximierung der Anzahl von Wälzkörpern eine Erhöhung der Tragfähigkeit erreicht.

Bei einigen weiteren Ausführungsbeispielen der vorliegenden Erfindung wird jeweils zwischen den einander direkt benachbarten Wälzkörpern in einem Wälzlager jeweils ein separates Abstandselement verwendet, das geometrisch so dimensioniert ist, dass es einen vorbestimmten Minimalabstand zwischen den beiden Wälzkörpern gewährleistet. So wird mit den Abstandselementen erreicht, dass zwischen zwei jeweils benachbarten Wälzkörpern ein Minimalabstand eingehalten wird und sich die benachbarten Wälzkörper nicht direkt berühren können bzw. aneinander anlaufen. Darüber hinaus können die einzelnen Abstandselemente (Spacer) äußerst dünn hergestellt werden, was es ermöglicht, eine maximal mögliche Anzahl von Wälzkörpern innerhalb eines Wälzlagers anzubringen und somit die maximale Tragfähigkeit für ein Wälzlager gegebener Größe zu erreichen. Anstatt den Abstand von mehreren Wälzkörpern gleichzeitig mittels eines einstückigen oder eines zusammenhängenden mehrstückigen Käfigs einzustellen, wie dies bei herkömmlichen Käfigen oder Käfigsegmenten der Fall ist, wird also zwischen direkt benachbarten Wälzkörpern jeweils ein separates Abstandselement verwendet. Separat bedeutet, dass jedes Abstandselement mit den übrigen in dem Lager verwendeten Abstandselementen weder starr noch flexibel verbunden ist, dass jedes Abstandselement von den übrigen also physikalisch getrennt ist. Dies ermöglicht darüber hinaus eine einfache Montage, da auch die Abstandselemente zusammen mit den Wälzkörpern in das Lager gefüllt bzw. eingelegt werden können. Ein zusätzlicher Montageschritt für die Anbringung des Lagerkäfigs kann dadurch entfallen.

Die Verwendung von Ausführungsbeispielen erfindungsgemäßer Abstandselemente ermöglicht also die Verwendung einer möglichst große Anzahl von Wälzkörpern ohne einen zusätzlichen hohen Montageaufwand zu verursachen.

Je nach Geometrie der Laufbahn bzw. des Lagers können dabei die Abstandselemente während des Befüllens bzw. des Bestückens des Wälzlagers neben den Wälzkörpern in das Lager eingelegt bzw. eingebracht werden. Erforderlichenfalls wird bei der Bestückung des Lagers bzw. des Außen- oder Innenrings das Abstandselement zunächst in einer Orientierung, die tangential zu einem Lagerteilkreis verläuft, zwischen die beiden Lagerringe eingebracht, um danach in eine finale, radial ausgerichtete Position gekippt zu werden. Dies kann vorteilhaft sein, wenn ein Teil des Abstandselements sich in der radialen Richtung in eine Ausnehmung in dem Lagerinnen- oder in dem Lageraußenring erstreckt. Bei derartigen Ausführungsbeispielen wird verhindert, dass das Abstandselement im zusammengebauten Zustand des Lagers aus dem Lager fallen kann.

Bevorzugte Ausführungsbeispiele der vorliegenden Erfindung werden nachfolgend, bezugnehmend auf die beiliegenden Figuren, erläutert. Es zeigen:
Fig. 1 ein Ausführungsbeispiel eines Wälzlagers mit einer Mehrzahl von Wälzkörpern und Abstandselementen;
Fig. 2 ein Ausführungsbeispiel eines Abstandselements in einer perspektivische Ansicht;
Fig. 3 eine Schnittansicht durch das Abstandselement von Fig. 2; und
Fig. 4 ein Ausführungsbeispiel eines Verfahrens zum Montieren eines Wälzlagers.

Wenngleich die nachfolgenden Ausführungsbeispiele anhand eines Kugellagers illustriert werden, versteht es sich von selbst, dass bei weiteren Ausführungsbeispielen erfindungsgemäßer Wälzlager sämtliche anderen Lagertypen, beispielsweise Zylinderrollenlager, Kegelrollenlager usw. verwendet werden können. Ebenso können alternative Ausführungsbeispiele von Abstandselementen in den eben bezeichneten Lagertypen verwendet werden.

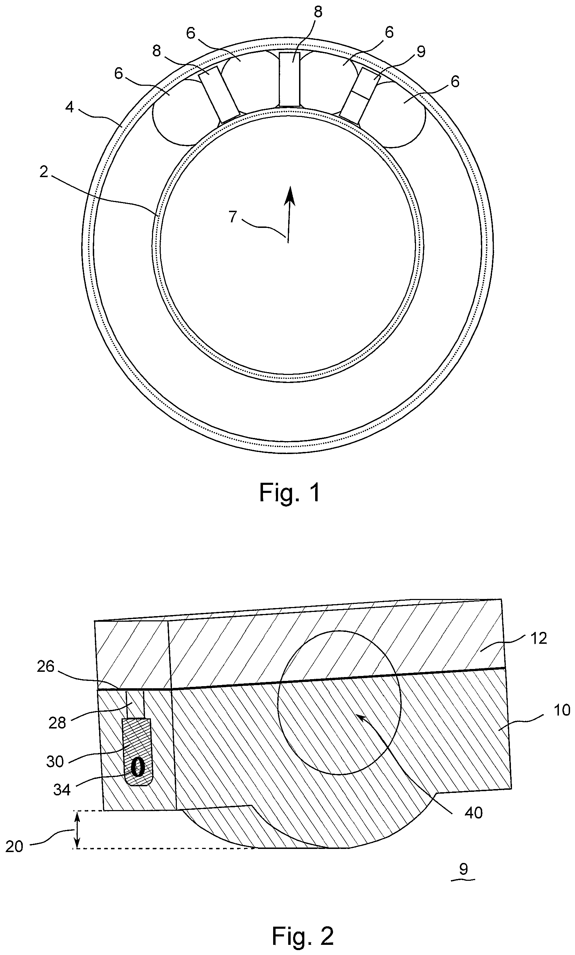

Fig. 1 zeigt eine Seitenansicht eines Kugellagers, d.h. eine Ansicht des Lagers in einer axialen Richtung. Das Kugel- bzw. Wälzlager weist einen Lagerinnenring 2 sowie einen Lageraußenring 4 auf. Ferner weist das Wälzlager als Wälzkörper 6 eine Mehrzahl von Kugeln auf. Die Kugeln 6 sind zwischen dem Lagerinnenring 2 und dem Lageraußenring 4 angeordnet und Rollen auf einer Laufbahn ab, die sich in einer radialen Richtung 7 um eine Laufbahntiefe nach innen bzw. außen in den Innen- bzw. Außenring erstreckt. Die Kontaktfläche der Kugeln 6 mit der Laufbahn ist hier jeweils gestrichelt angedeutet.

Zwischen jeweils zwei direkt zueinander benachbarten Wälzkörpern 6 ist je ein Abstandselement 8 angeordnet, um zu verhindern, dass sich die benachbarten Wälzkörper 6 direkt berühren. Der Minimalabstand, der durch die Verwendung der Abstandselemente 8 gewährleistet wird, ist von der Geometrie der Abstandselemente 8 abhängig und kann insbesondere äußerst klein gehalten werden. Der minimale Abstand zwischen benachbarten Wälzkörpern 6 tritt hier in etwa an einem Lagerteilkreis auf, der durch einen idealisierten Kreis definiert ist, welcher durch die Zentren der einzelnen Kugeln 6 verläuft und dessen Mittelpunkt sich auf der Rotationsachse des Lagers befindet.

Wie bereits weiter oben ausgeführt, ist zwischen zwei direkt benachbarten Wälzkörpern 6 jeweils ein separates Abstandselement 8 vorgesehen, d.h. die einzelnen Abstandselemente 8, die entlang des Umfangs des Wälzlagers angeordnet sind, sind miteinander weder flexibel noch starr verbunden und berühren sich nicht. Durch die Verwendung der Abstandselemente 8 ergeben sich die oben beschriebenen Vorteile hinsichtlich der Anzahl möglicher Kugeln bzw. Wälzkörper 6 in einem Lager und hinsichtlich der Montage des Lagers selbst.

Zusätzlich bieten die separaten Abstandshalter gegenüber herkömmlichen Käfigen, beispielsweise aus Messing oder Blech, den Vorteil eines reduzierten Materialeinsatzes und somit einer Kostenersparnis.

Verglichen mit Kunststoff-Schnappkäfigen oder dergleichen hat die Verwendung einzelner Abstandselemente 8 zusätzlich den Vorteil, dass auch bei hohen Schiefstellungen die Performance des Lagers gewährleistet ist, dass also das Lager auch bei hohen Schiefstellungen zuverlässig seinen Dienst verrichtet.

Wie in Fig. 1 angedeutet und nachfolgend in Fig. 2 noch deutlicher ersichtlich, sind bei einigen Ausführungsbeispielen die Anlaufflächen eines Abstandselements 8, also diejenige Seitenflächen, die dem benachbarten Wälzkörper 6 zugewandt sind, an die Oberflächenkontur des jeweils angrenzenden Wälzkörpers 6 angepasst. Anpassung bedeutet beispielsweise, dass die Konturen der einander berührenden bzw. gegenüberliegenden Oberflächen des Wälzkörpers 6 und des Abstandselements 8 derart aufeinander abgestimmt sein können, dass eine Schmierung verbessert und die Reibung zwischen Wälzkörper 6 und Abstandselement 8 minimiert wird. Dabei kann die Kontur des Abstandselements 8 beispielsweise der Kontur des benachbarten Wälzkörpers 6 entsprechen, um so eine möglichst große Kontaktfläche zu erzielen. In alternativen Ausführungsbeispielen kann beispielsweise vorgesehen werden, dass das Abstandselement 8 und der benachbarten Wälzkörper 6 sich lediglich in einem Punkt berühren. Allgemein gesprochen kann ein Verhältnis der Krümmungen der Oberfläche des Wälzkörpers 6 und der daran angrenzenden Oberfläche des Abstandselements 8 beliebig eingestellt werden.

Es versteht sich von selbst, dass, obwohl in Fig. 1 exemplarisch nur vier Wälzkörper 6 mit drei dazwischen liegenden Abstandselementen 8 dargestellt sind, in alternativen Ausführungsbeispielen eine beliebige Anzahl von Wälzkörpern 6 und Abstandselementen 8 vorgesehen sein können. Die übrigen Wälzkörper, die das Lager füllen, wurden in Fig. 1 aus Gründen der Übersichtlichkeit nicht dargestellt. Insbesondere beschreibt der Begriff Mehrzahl also auch ein Ausführungsbeispiel mit einem ersten Wälzkörper, einem zweiten Wälzkörper, einem dritten Wälzkörper und einem vierten Wälzkörper, wobei ein erstes Abstandselement zwischen dem ersten Wälzkörper und dem zweiten Wälzkörper, ein zweites Abstandselement zwischen dem zweiten Wälzkörper und dem dritten Wälzkörper und ein drittes Abstandselement zwischen dem dritten Wälzkörper und dem vierten Wälzkörper angeordnet ist.

Fig. 2 zeigt ein Ausführungsbeispiel eines ausgewählten Abstandselements 9, das in dem Lager von Fig. 1 verwendet wird.

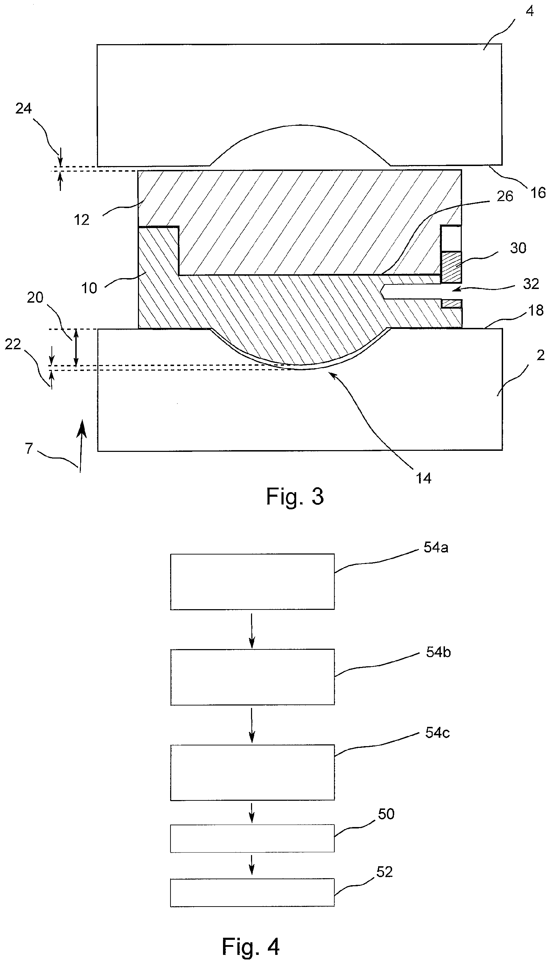

Das in Fig. 2 dargestellte Ausführungsbeispiel ist zweiteilig ausgeführt und besteht aus einem innenliegenden Teilelement 10 und einem außenliegenden Teilelement 12. Wenngleich anhand von den Figuren 2 und 3 nachfolgend ein zweiteiliges, ausgewähltes Abstandselement 9 diskutiert werden wird, welches, wie oben beschrieben, beispielsweise als letztes Abstandselement bei der Montage eines Wälzlagers verwendet werden kann, gelten die geometrischen Überlegungen und Betrachtungen gleichermaßen für einteilige Abstandselemente 8, die beispielsweise in Fig. 1 dargestellt sind.

Fig. 3 zeigt einen radialen Schnitt durch das ausgewählte Abstandselement 9 von Fig. 2 im eingebauten Zustand in einem Kugellager. Die Figuren 2 und 3 werden nachfolgend zusammen beschrieben, wobei für die Erläuterung der einzelnen Merkmale des Abstandselements 8 bzw. des ausgewählten Abstandselements 9 auf die jeweils besser geeignet Figur Bezug genommen werden wird.

Wie in Fig. 3 ersichtlich, erstreckt sich das ausgewählte Abstandselement 9 entgegengesetzt zu der radialen Richtung 7 in eine Ausnehmung 14, die sich in der radialen Richtung in den Lagerinnenrings bzw. in den ersten Lagerrings 2 erstreckt. Bei weiteren Ausführungsbeispielen erstreckt sich das Abstandselement in der radialen Richtung 7 zusätzlich oder alternativ in eine Ausnehmung am Außenring 4. Die Ausnehmung wird vorliegend von der Lauffläche für die Kugeln 6 gebildet. Bei weiteren Ausführungsbeispielen kann auch eine von der Lauffläche getrennte Ausnehmung in einem der Lagerringe vorgesehen werden, die sich zum Zweck der Führung des ausgewählten Abstandselements 9 in einen der Lagerringe erstreckt.

Das ausgewählte Abstandselement 9 kann während des Betriebs des Lagers sowohl an der Schulter, also an einer Außenringschulter 16 oder einer Innenringschulter 18, als auch an der Laufbahn, also durch die Ausnehmung 14, geführt werden. Das ausgewählte Abstandselement 9 bzw. ein Abstandselement 8 kann sich bei alternativen Ausführungsbeispielen auch um mehr als eine in Fig. 3 dargestellte Erstreckungslänge 20 in die Ausnehmung erstrecken, so dass die Lauffläche von dem ausgewählten Abstandselement 9 berührt und zur Führung genutzt werden kann. Ferner versteht es sich von selbst, dass bei alternativen Ausführungsbeispielen das ausgewählte 9 auch umgekehrt eingesetzt werden kann, so dass es sich nicht in die Laufbahn des Lagerinnenrings 2 sondern in die Laufbahn des Lageraußenrings 4 erstreckt. In dem in Fig. 3 dargestellten Fall mit Schulterführung ist ein radialer Abstand 22 zwischen dem ausgewählten Abstandselement 9 und der Oberfläche der Laufbahn (eine radiale Luft am unteren Segmentteil) größer 0, um eine Laufbahnführung zu vermeiden.

Bei einigen Ausführungsbeispielen mit Schulterführung weist das Lager eine definierte Radialluft 24 zwischen Außenringschulter 16 bzw. Innenringschulter 18 und ausgewählten Abstandselement 9 auf. D.h., in der radialen Richtung ist die Dimension des ausgewählten Abstandselements 9 so, dass sich zwischen dem Abstand des Innenrings 2 vom Außenring 4 und der radialen Ausdehnung des ausgewählten Abstandselements 9 ein der Radialluft 24 entsprechender Unterschied ergibt. Dabei kann die Radialluft 24 so gewählt werden, dass durch sie ein eventuelles Klemmen bzw. ein Verkippen des ausgewählten Abstandselements 9 im Lager verhindert wird. Bei einigen Ausführungsbeispielen wird ein Herausfallen des montierten ausgewählten Abstandselements 9 (des Segments) dadurch vermieden, dass die Erstreckungslänge 20 am innenliegenden Teilelement 10 (dem unteren Segment) größer ist, als die Radialluft 24.

Das dargestellte zweiteilige ausgewählte Abstandselement 9 weist eine Trennfläche 26 auf, an der das innenliegende Teilelement 10 und das außenliegenden Teilelement 12 aneinander grenzen und einander berühren. Die Trennfläche 26 ist dadurch charakterisiert, dass sie sich vorwiegend in axialer Richtung erstreckt und das ausgewählte Abstandselement 9 in zwei Teile geteilt, wobei sich die Trennfläche26 im konkreten Ausführungsbeispiel auch nicht bis zu einem radialen Ende eines der Teilelemente erstreckt. Mit anderen Worten verläuft die Trennfläche26 im gezeigten Ausführungsbeispiel im Wesentlichen horizontal (in axialer Richtung) und nicht vertikal.

Bei weiteren Ausführungsbeispielen kann die Trennfläche26 eine andere definierte geometrische Form aufweisen, um beispielsweise durch Klemmen oder Quetschen einzelner Teile des innenliegenden Teilelements 10 oder des außenliegenden Teilelements 12 beim Zusammenfügen der Teilelemente eine dauerhafte Verbindung herzustellen. Allgemein gesprochen kann die Verbindung der Teilelemente 10 und 12 form-, kraft-oder stoffschlüssig sein.

Im konkreten Ausführungsbeispiel der Figuren 2 und 3 ist die Verbindung formschlüssig ausgeführt. Zu diesem Zweck ist die Trennfläche 26 auch in Form einer T-Nut 28 ausgebildet, so dass eines der beiden Teilelemente beim Zusammenfügen in die Nut 28 des anderen Teilelements eingreift. Wenn die Zusammenführung der Teilelemente in der axialen Richtung vollendet ist, wird die endgültige Verbindung mittels eines Verriegelungsplättchens 30 vorgenommen, welches sich am Ende der T-Nut 28 befindet. Das innenliegende Teilelement 10 weist eine Gewindebohrung 32 auf, mittels derer das Verriegelungsplättchen 30 von einer Schraube 34 gegen das innenliegende Teilelement 10 geschraubt werden kann. Dadurch wird ein Herausgleiten aus der T-Nut 28 verhindert und so die formschlüssige Verbindung zwischen dem innenliegenden Teilelement 10 sind dem außenliegenden Teilelement 12 hergestellt.

Wie aus der Fig. 2 ersichtlich, ist die den benachbarten Kugeln 6 zugewandte Anlauffläche 40 des ausgewählten Abstandselements 9 ferner an die kugelige Oberflächenkontur des benachbarten Wälzkörpers 6 angepasst. D.h., die Anlauffläche 40 weist einen ähnlichen oder identischen Radius wie die benachbarte Kugel 6 auf, um gute Schmierbedingungen für den Wälzkörper bzw. für die Kugel 6 zu gewährleisten.

Fig. 4 zeigt ein Ausführungsbeispiel eines erfindungsgemäßen Verfahrens zum Montieren eines Wälzlagers unter Verwendung eines ausgewählten, zweiteiligen Abstandselements 9.

In einem Teilpositionierungsschritt 54a wird ein erstes, radial innenliegendes Teilelement 10 zwischen zwei benachbarten Wälzkörpern angeordnet, so dass sich das erste Teilelement 10 entgegen einer radialen Richtung 7 von einer Trennfläche 26 zu einem Lagerinnenring 2 hin erstreckt.

In einem zweiten Teilpositionierungsschritt 54b wird ein zweites, radial außenliegendes Teilelement 12 zwischen den benachbarten Wälzkörpern 6 angeordnet, sodass sich das zweite Teilelement12 in der radialen Richtung 7 von der Trennfläche 26 zu dem Lageraußenring 4 hin erstreckt.

In einem Verbindungsschritt 54c wird das erste Teilelement 10 und das zweite Teilelement 12 form-, kraft-oder stoffschlüssig miteinander verbunden.

Zusätzlich kann bei dem Verfahren optional in einem Positionierungsschritt 50 eine Mehrzahl von Wälzkörpern 6 zwischen einem Lagerinnenring 2 und einem Lageraußenring 4 angeordnet werden.

Zusätzlich kann in einem optionalen Fertigstellungsschritt 52 ein separates Abstandselement 8 zwischen zwei jeweils direkt zueinander benachbarten Wälzkörpern 6 angeordnet werden, wobei jedes Abstandselement 8 ausgebildet ist, um zwischen den zwei benachbarten Wälzkörpern 6 einen vorbestimmten Minimalabstand zu gewährleisten und wobei das Abstandselement 8 jeweils physikalisch getrennt von allen weiteren Abstandselementen 8 des Wälzlagers ausgebildet ist.

Bei Anwendung der Ausführungsbeispiele der Verfahren zur Montage eines Lagers kann ohne großen Montagemehraufwand die Anzahl von Wälzkörpern in einem Wälzlager maximiert werden.

### Bezugszeichenliste

2 Lagerinnenring
4 Lageraußenring
6 Wälzkörper
7 radiale Richtung
8 Abstandselement
9 ausgewähltes Abstandselement
10 innenliegendes Teilelement
12 außenliegendes Teilelement
14 Ausnehmung
16 Außenringschulter
18 Innenringschulter
20 Erstreckungslänge
22 radialer Abstand
24 Radialluft
26 Trennfläche
28 T-Nut
30 Verriegelungsplättchen
32 Gewindebohrung
34 Schraube
40 Anlauffläche
50 Positionierungsschritt
52 Fertigstellungsschritt
54a erster Teilpositionierungsschritt
54b zweiter Teilpositionierungsschritt
54c Verbindungsschritt

## Patentansprüche

1. Wälzlager mit einer Mehrzahl von Wälzkörpern (6), wobei entlang eines Lagerteilkreises zwischen zwei direkt benachbarten Wälzkörpern (6) ein ausgewähltes Abstandselement (9) angeordnet ist, welches ausgebildet ist, um zwischen den zwei benachbarten Wälzkörpern (6) einen vorbestimmten Minimalabstand zu gewährleisten, wobei das ausgewählte Abstandselement (9) physikalisch getrennt von allen weiteren Abstandselementen (8) des Wälzlagers ausgeführt ist und aus einem ersten, in einer radialen Richtung innenliegenden Teilelement (10) und aus einem zweiten, in der radialen Richtung außenliegenden Teilelement (12) besteht, welches mit dem ersten Teilelement (10) form-, kraft- oder stoffschlüssig verbunden ist; und wobei
sich das ausgewählte Abstandselement (9) in oder entgegen der radialen Richtung (7) um eine vorbestimmte Länge (20) in eine Ausnehmung eines ersten Lagerrings (2) erstreckt, wobei die vorbestimmte Länge (20) größer ist als ein Abstand zwischen dem ausgewählten Abstandselement (9) und einem zweiten, dem ersten Lagerring (2) gegenüberliegenden Lagerring (4) in der radialen Richtung (7).

2. Wälzlager gemäß Anspruch 1, bei dem eine dem benachbarten Wälzkörper (6) zugewandte Anlauffläche (40) des ausgewählten Abstandselements (9) an eine Oberflächenkontur des benachbarten Wälzkörpers (6) angepasst ist.

3. Wälzlager gemäß einem der vorhergehenden Ansprüche, welches entlang des Lagerteilkreises ferner eine Mehrzahl von jeweils zwischen zwei direkt benachbarten Wälzkörpern (6) angeordneten Abstandselementen (8) aufweist, die ausgebildet sind, um zwischen den zwei benachbarten Wälzkörpern (6) einen vorbestimmten Minimalabstand zu gewährleisten, wobei jedes der Abstandselemente (8) jeweils physikalisch getrennt von allen weiteren Abstandselementen (8) des Wälzlagers ausgeführt ist.

4. Wälzlager gemäß einem der vorhergehenden Ansprüche, bei dem sich das erste Teilelement (10) von einer einem Lagerinnenring (2) zugewandten Innenseite des ausgewählten Abstandselements (9) bis zu einer Trennfläche (26) erstreckt, und bei dem sich das zweite Teilelement (12) von der Trennfläche (26) bis zu einer einem Lageraußenring (4) zugewandten Außenseite des ausgewählten Abstandselements (9) erstreckt, wobei sich die Trennfläche (26) vollständig zwischen der Außenseite und der Innenseite des ausgewählten Abstandselements (9) befindet.

5. Wälzlager gemäß einem der vorhergehenden Ansprüche, bei dem die Ausnehmung (14) eine Laufbahn für die Wälzkörper aufweist.

6. Wälzlager gemäß einem der vorhergehenden Ansprüche, bei dem sich das ausgewählte Abstandselement (9) entgegen der radialen Richtung (7) um eine vorbestimmte Länge (20) in eine Ausnehmung eines ersten Lagerinnenrings (2) erstreckt, wobei die vorbestimmte Länge (20) größer ist als ein Abstand zwischen dem ausgewählten Abstandselement (9) und einem Lageraußenring in der radialen Richtung.

7. Verfahren zum Montieren eines Wälzlagers, umfassend:
Anordnen eines ersten, radial innenliegenden Teilelements (10) eines Abstandselements (9) zwischen zwei direkt benachbarten Wälzkörpern, sodass sich das erste Teilelement (10) entgegen einer radialen Richtung von einer Trennfläche (26) zu dem Lagerinnenring (2) hin und um eine vorbestimmte Länge (20) in eine Ausnehmung am Lagerinnenring (2) erstreckt;
Anordnen eines zweiten, radial außenliegenden Teilelements (12) zwischen den zwei benachbarten Wälzkörpern, sodass sich das zweite Teilelement (12) in der radialen Richtung von der Trennfläche (26) zu dem Lageraußenring (4) hin erstreckt, wobei die vorbestimmte Länge (20) größer ist als ein Abstand zwischen dem radial außenliegenden Teilelement und dem Lageraußenring (4); und
form-, kraft- oder stoffschlüssiges Verbinden des ersten Teilelements (10) und des zweiten Teilelements (12).

## Claims

1. Rolling bearing having a plurality of rolling bodies (6), a selected spacer element (9) being arranged along a bearing pitch circle between two directly adjacent rolling bodies (6), which selected spacer element (9) is configured to ensure a predefined minimum spacing between the two adjacent rolling bodies (6), the selected spacer element (9) being configured so as to be physically separate from all further spacer elements (8) of the rolling bearing and comprising a first inner part element (10) in a radial direction and a second outer part element (12) in the radial direction, which second part element (12) is connected to the first part element (10) in a positively locking, non-positive or material-to-material manner; and
the selected spacer element (9) extending in or counter to the radial direction (7) by a predefined length (20) into a recess of a first bearing ring (2), the predefined length (20) being greater than a spacing between the selected spacer element (9) and a second bearing ring (4) in the radial direction (7), which bearing ring (4) lies opposite the first bearing ring (2).

2. Rolling bearing according to Claim 1, in which a run-on surface (40), facing the adjacent rolling body (6), of the selected spacer element (9) is adapted to a surface contour of the adjacent rolling body (6).

3. Rolling bearing according to one of the preceding claims, which rolling bearing has, furthermore, a plurality of spacer elements (8) along the bearing pitch circle which are arranged in each case between two directly adjacent rolling bodies (6) and are configured to ensure a predefined minimum spacing between the two adjacent rolling bodies (6), each of the spacer elements (8) being configured in each case so as to be physically separate from all further spacer elements (8) of the rolling bearing.

4. Rolling bearing according to one of the preceding claims, in which the first part element (10) extends from an inner side, facing a bearing inner ring (2), of the selected spacer element (9) as far as a parting plane (26), and in which the second part element (12) extends from the parting plane (26) as far as an outer side, facing a bearing outer ring (4), of the selected spacer element (9), the parting plane (26) being situated completely between the outer side and the inner side of the selected spacer element (9).

5. Rolling bearing according to one of the preceding claims, in which the recess (14) has a raceway for the rolling bodies.

6. Rolling bearing according to one of the preceding claims, in which the selected spacer element (9) extends counter to the radial direction (7) by a predefined length (20) into a recess of a first bearing inner ring (2), the predefined length (20) being greater than a spacing between the selected spacer element (9) and a bearing outer ring in the radial direction.

7. Method for assembling a rolling bearing, comprising:
arrangement of a first, radially inner part element (10) of a spacer element (9) between two directly adjacent rolling bodies, with the result that the first part element (10) extends counter to a radial direction from a parting plane (26) toward the bearing inner ring (2) and by a predefined length (20) into a recess on the bearing inner ring (2);
arrangement of a second, radially outer part element (12) between the two adjacent rolling bodies, with the result that the second part element (12) extends in the radial direction from the parting plane (26) toward the bearing outer ring (4), the predefined length (20) being greater than a spacing between the radially outer part element and the bearing outer ring (4); and
positively locking, non-positive or material-to-material connection of the first part element (10) and the second part element (12).

## Revendications

1. Palier à roulement comprenant une pluralité de corps de roulement (6), dans lequel un élément d'espacement (9) sélectionné est disposé entre deux corps de roulement (6) directement adjacents le long d'un cercle primitif de palier, lequel élément d'espacement est formé de manière à garantir une distance minimale prédéfinie entre les deux corps de roulement (6) adjacents, dans lequel l'élément d'espacement (9) sélectionné est réalisé de manière séparée physiquement de tous les autres éléments d'espacement (8) du palier à roulement, et est constitué d'un premier élément partiel (10) intérieur dans une direction radiale et d'un deuxième élément partiel (12) extérieur dans la direction radiale, lequel est relié au premier élément partiel (10) par complémentarité de forme, par force ou par liaison de matière ; et dans lequel
l'élément d'espacement (9) sélectionné s'étend sur une longueur prédéfinie (20) dans un évidement d'une première bague de palier (2) dans la direction radiale (7) ou en sens inverse à celle-ci, dans lequel la longueur prédéfinie (20) est supérieure à une distance entre l'élément d'espacement (9) sélectionné et une deuxième bague de palier (4) en regard de la première bague de palier (2) dans la direction radiale (7).

2. Palier à roulement selon la revendication 1, dans lequel une surface de contact (40), tournée vers le corps de roulement (6) adjacent, de l'élément d'espacement (9) sélectionné est adaptée à un contour de surface du corps de roulement (6) adjacent.

3. Palier à roulement selon l'une des revendications précédentes, lequel comprend, le long du cercle primitif de palier, en outre une pluralité d'éléments d'espacement (8) disposés respectivement entre deux corps de roulement (6) directement adjacents, lesquels éléments d'espacement sont formés de manière à garantir une distance minimale prédéfinie entre les deux corps de roulement (6) adjacents, dans lequel chacun des éléments d'espacement (8) est respectivement réalisé de manière séparée physiquement de tous les autres éléments d'espacement (8) du palier à roulement.

4. Palier à roulement selon l'une des revendications précédentes, dans lequel le premier élément partiel (10) s'étend d'un côté intérieur, tourné vers une bague intérieure de palier (2), de l'élément d'espacement (9) sélectionné à une surface de séparation (26), et dans lequel le deuxième élément partiel (12) s'étend de la surface de séparation (26) à un côté extérieur, tourné vers une bague extérieure de palier (4), de l'élément d'espacement (9) sélectionné, la surface de séparation (26) se trouvant complètement entre le côté extérieur et le côté intérieur de l'élément d'espacement (9) sélectionné.

5. Palier à roulement selon l'une des revendications précédentes, dans lequel l'évidement (14) comprend un chemin de roulement pour les corps de roulement.

6. Palier à roulement selon l'une des revendications précédentes, dans lequel l'élément d'espacement (9) sélectionné s'étend sur une longueur prédéfinie (20) dans un évidement d'une première bague intérieure de palier (2) en sens inverse à la direction radiale (7), dans lequel la longueur prédéfinie (20) est supérieure à une distance entre l'élément d'espacement (9) sélectionné et une bague extérieure de palier dans la direction radiale.

7. Procédé permettant de monter un palier à roulement, comportant :
l'agencement d'un premier élément partiel (10) radialement intérieur d'un élément d'espacement (9) entre deux corps de roulement directement adjacents, de telle sorte que le premier élément partiel (10) s'étende, en sens inverse à une direction radiale, à partir d'une surface de séparation (26) vers la bague intérieure de palier (2) et sur une longueur prédéfinie (20) dans un évidement sur la bague intérieure de palier (2) ;
l'agencement d'un deuxième élément partiel (12) radialement extérieur entre les deux corps de roulement adjacents, de telle sorte que le deuxième élément partiel (12) s'étende, dans la direction radiale, à partir de la surface de séparation (26) vers la bague extérieure de palier (4), dans lequel la longueur prédéfinie (20) est supérieure à une distance entre l'élément partiel radialement extérieur et la bague extérieure de palier (4) ; et
la liaison par complémentarité de forme, par force ou par liaison de matière du premier élément partiel (10) et du deuxième élément partiel (12).
